# EUROPÄISCHE PATENTSCHRIFT

(11) **EP 1 637 371 B1**
(45) Veröffentlichungstag und Bekanntmachung des Hinweises auf die Patenterteilung: **22.10.2008**
(21) Anmeldenummer: 05018998.4
(22) Anmeldetag: 01.09.2005
(51) Int. Cl.: B60H 1/00

(54) **Luftausströmer, insbesondere für ein Fahrzeug**
Air outlet, in particular for a vehicle
Aérateur, notamment pour véhicule automobile

(30) Priorität: 17.09.2004 DE 202004014490 U
(43) Veröffentlichungstag der Anmeldung: 22.03.2006
(73) Patentinhaber: TRW Automotive Electronics & Components GmbH, 78315 Radolfzell (DE)
(72) Erfinder: Neumann, Skadi, 95100 Selb (DE); Ehlers, Bernd, 95326 Kulmbach (DE)
(74) Vertreter: Sties, Jochen

(56) Entgegenhaltungen:
- EP-A- 0 405 380
- DE-A1- 19 511 652
- DE-A1- 19 745 871
- FR-A- 2 760 694
- US-A1- 2006 040 606
- US-B1- 6 582 293

## Beschreibung

Die Erfindung betrifft einen Luftausströmer nach dem Oberbegriff, des Anspruchs 1, insbesondere für ein Fahrzeug.

Solche Luftausströmer sind in den verschiedensten Ausgestaltungen bekannt. Sie dienen allgemein dazu, das Volumen und die Richtung eines Luftstroms, der einem Fahrzeuginnenraum zur Klimatisierung zugeführt wird, in der gewünschten Weise einzustellen. Übliche Bestandteile sind verstellbare Lamellen, durch die der Luftstrom abgelenkt werden kann.

Bei bekannten Luftausströmern können sich die Lamellen auf Grund von Vibrationen während des Fahrbetriebs unbeabsichtigt bewegen. Dies ist unerwünscht.

Die gattungsbildende DE 197 45 871 A1 zeigt einen Luftausströmer für ein Fahrzeug mit einem schwenkbaren Lamelleneinsatz. Der Lamelleneinsatz hat einen Lagerzapfen, der in einer Ausnehmung im Rahmen aufgenommen ist. Um einer Bewegung des Lamelleneinsatzes eine Reibung entgegenzusetzen, ist ein topfartiges Teil aus gummielastischem Material vorgesehen, das den Lagerzapfen umgibt.

Aus der DE 195 11 652 A1 ist ein Lüftausströmer für ein Fahrzeug mit einem schwenkbaren Einsatz bekannt. Ein Lagerzapfen, der am Rahmen angeformt ist, kann in eine C-förmige Aufnahme eingreifen. Eine Feder erzeugt einen Reibungswiderstand zwischen dem Lagerzapfen und der Aufnahme, so daß sich der Einsatz nicht selbsttätig verstellen kann.

Die Aufgabe der Erfindung besteht darin, einen Luftausströmer zu schaffen, der eine Fixierung der Lamellen gewährleistet, so daß ein unbeabsichtigtes Verstellen der Lamellen verhindert ist.

Zu diesem Zweck sieht die Erfindung einen Luftausströmer mit den Merkmalen des Anspruchs 1 vor, insbesondere für ein Fahrzeug. Die mit der Erfindung erzielten Vorteile bestehen insbesondere darin, daß die von dem Fahrzeuginsassen gewünschte Stellung der Lamellen auch bei Vibrationen während des Fahrbetriebs beibehalten werden. Auch kann mit geringem Aufwand die Betätigungskraft der Lamellen auf einen gewünschten Wert eingestellt werden.

Das Reibelement liegt erfindungsgemäß in einer Aussparung, die keilförmig ist und in einem Gehäuse vorgesehen ist. Durch die Integration der Aussparung im Gehäuse kann ein zusätzliches Bauteil sowie eine Befestigung dessen an dem Gehäuse entfallen.

Vorzugsweise ist die Lamelle über einen Zapfen an einem Lagerteil befestigt. Der Zapfen ermöglicht eine einfache, nachträgliche Montage der Lamelle.

Das Reibelement kann an dem Zapfen angreifen. Dadurch wird eine nachträgliche Montage ermöglicht.

Vorzugsweise ist das Reibelement mit dem Lagerteil fest verbunden. Die einstückige Ausführung ermöglicht eine schnelle und somit preisgünstige Montage vor Ort.

Das Reibelement ist bevorzugt als Klammer ausgebildet, wobei die freien Enden an der Aussparung anliegen und zusammengedrückt werden. Eine gleichmäßige Krafteinleitung wird durch das Zusammendrücken der Enden der Klammer ermöglicht. Außerdem kann die gewünschte Vorspannkraft mit geringem Aufwand bei der Montage erzeugt werden.

Vorzugsweise greift ein Bedienelement an der Lamelle an, die mit dem Reibelement in Verbindung steht. Damit ist eine direkte Krafteinleitung möglich, und etwaiges Spiel in der Kopplung der Lamellen untereinander wird nicht wahrgenommen.

Weitere Merkmale und Vorteile der Erfindung ergeben sich aus den Unteransprüchen. Die Erfindung wird nachfolgend anhand der bevorzugten Ausführungsform beschrieben, die in den Zeichnungen dargestellt ist. In den Zeichnungen zeigen:
- Figur 1 eine perspektivische Ansicht eines erfindungsgemäßen Luftausströmers in einer ersten Ausführungsform,
- Figur 2 einen vergrößerter Ausschnitt des mit X bezeichneten Bereichs in Figur 1 des Luftausströmers,
- Figur 3 eine schematische Ansicht des mit X bezeichneten Bereichs in Figur 1 des Luftausströmers, und
- Figur 4 eine perspektivische Ansicht des Luftauströmers in einer zweiten Ausführungsform.

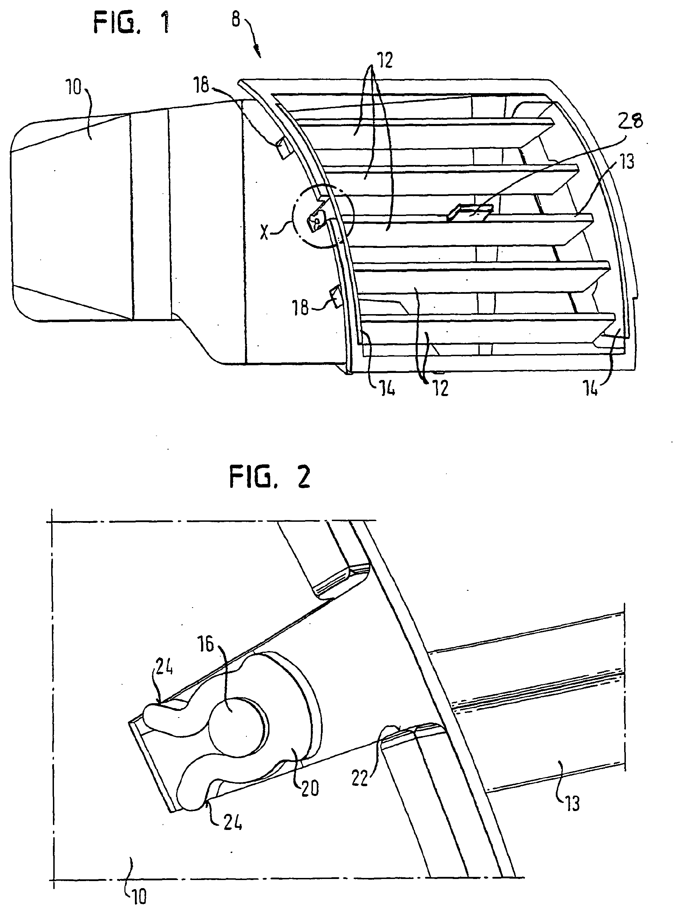

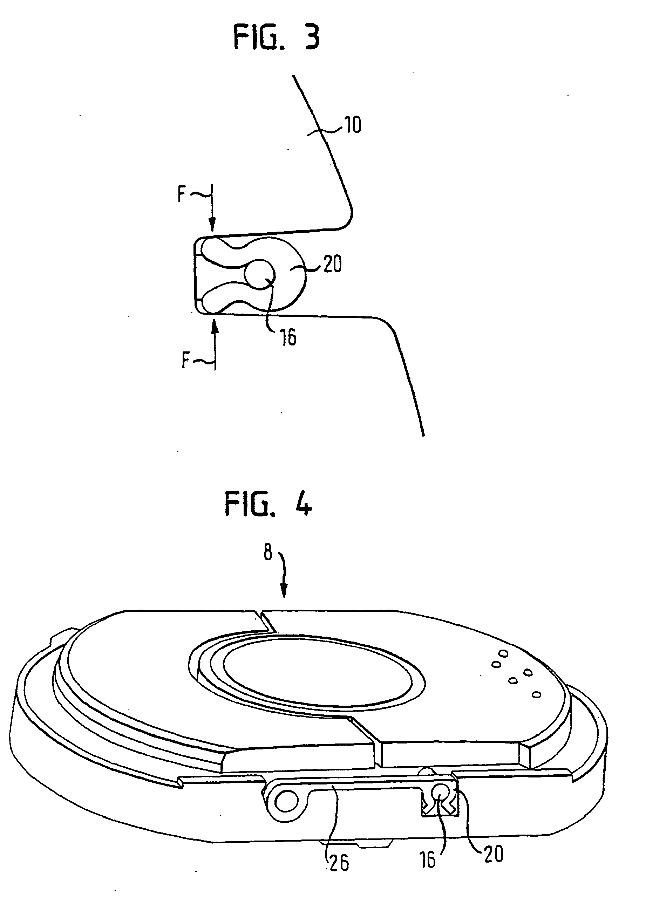

Figur 1 zeigt einen Luftausströmer 8. Der Luftausströmer 8 weist ein Gehäuse 10 auf. Der von dem Fahrzeuginsassen sichtbare Teil des Gehäuses 10 ist rechteckig, kann jedoch auch rund ausgeführt werden (Figur 4).

Der Luftausströmer 8 weist mehrere Lamellen 12, 13 auf. Figur 1 zeigt fünf Lamellen 12, 13, die parallel zueinander und horizontal angeordnet sind.

Der Luftausströmer 8 weist Lagerteile 14 auf, die sich an gegenüberliegenden Rändern des Gehäuses 10 befinden und mittels Rastelementen 18 an dem Gehäuse 10 befestigt sind. Die Lagerteile 14 passen sich der Form des Gehäuses 10 an; in dieser Ausführungsform sind sie gekrümmt ausgeführt.

Die Lamellen 12, 13 sind an den Lagerteilen 14 befestigt. Die Lamellen 12, 13 weisen je zwei Zapfen 16 auf, die an den entgegengesetzten Enden der Lamellen 12, 13 angeordnet sind und in entsprechende Aussparungen der Lagerteile 14 eingreifen.

Eine der Lamellen 12, 13 ist auf bekannte Art und Weise mit einem Bedienelement 28 verbunden und ist mit dem Bezugszeichen 13 versehen. Diese Lamelle 13 weist ebenfalls zwei entgegengesetzte Zapfen 16 auf. An einem der Zapfen 16 greift ein Reibelement 20 an (Figur 2); und zwar greift das Reibelement 20 an einer einzigen Lamelle 13 an. Das Reibelement 20 ist in dieser Ausführungsform einstückig mit dem Lagerteil 14 ausgebildet, kann jedoch auch nachträglich an dem Lagerteil 14 angebracht werden. Das Reibelement 20 ist als Klammer ausgeführt und ist ein Federelement aus Kunststoff.

Das Reibelement 20 liegt in einer Aussparung 22 des Gehäuses 10, die keilförmig ausgeführt ist. Das Reibelement 20 wird an den freien Enden von der zusammenlaufenden Aussparung 22 zusammengedrückt. Das Reibelement 20 weist eine Rille 24 auf. Die Rille 24 ist zumindest im Bereich der Enden, die sich an der Aussparung 22 des Gehäuses 10 stützen, angeordnet. Die Rille 24 ermöglicht, daß das Reibelement sicher an der Aussparung 22 des Gehäuses 10 befestigt ist, da die Ränder des Reibelements 20 an der Aussparung 22 überstehen. So kann die Stellung sicher beibehalten werden.

Das Zusammendrücken der Enden des Reibelements 20 durch das Gehäuse 10 bewirkt eine Kraft F (Figur 3), die sich auf den Zapfen 16, der mit der Lamelle 13 verbunden ist, überträgt. Die Reibkraft ist auch vorhanden, wenn das Bedienelement 28 nicht verdreht wird. So wird die Stellung der Lamelle 13, die mit den übrigen Lamellen 12 über eine bereits bekannte Koppelstange (nicht gezeigt ) verbunden ist, in jeder beliebigen Stellung fixiert, und es kann ein ungewolltes Verstellen verhindert werden.

Figur 4 zeigt die Anordnung des Reibelements 20 in einem runden Luftausströmer 8. Das Reibelement 20 ist ebenfalls über einen der Zapfen 16 mit der Lamelle 13 verbunden. Das Reibelement 20 weist hier eine Montagestange 26 auf, die sich am Zapfen 16 einer zweiten Lamelle 12 abstützt. Da die Wirkungsweise des Reibelements 20 identisch mit der oben beschriebenen ist, wird hier nicht näher darauf eingegangen.

## Patentansprüche

1. Luftausströmer, insbesondere für ein Fahrzeug, mit wenigstens einer verstellbaren Lamelle (13), der ein Reibelement (20) zugeordnet ist, das einer Bewegung der Lamelle (13) Reibung entgegensetzt, wobei das Reibelement (20) in einer Aussparung (22) liegt, die in einem Gehäuse (10) vorgesehen ist, **dadurch gekennzeichnet, daß** die Aussparung (22) keilförmig ist.

2. Luftausströmer nach Anspruch 1, **dadurch gekennzeichnet, daß** die Lamelle (13) über einen Zapfen (16) an einem Lagerteil (14) befestigt ist.

3. Luftausströmer nach Anspruch 2, **dadurch gekennzeichnet, daß** das Reibelement (20) an dem Zapfen (16) angreift.

4. Luftausströmer nach Anspruch 2 oder 3, **dadurch gekennzeichnet, daß** das Reibelement (20) an dem Lagerteil (14) angebracht ist.

5. Luftausströmer nach Anspruch 2 oder 3, **dadurch gekennzeichnet, daß** das Reibelement (20) mit dem Lagerteil (14) fest verbunden ist.

6. Luftausströmer nach einem der vorhergehenden Ansprüche, **dadurch gekennzeichnet, daß** das Reibelement (20) als Federelement ausgebildet ist.

7. Luftausströmer nach einem der vorhergehenden Ansprüche, **dadurch gekennzeichnet, daß** das Reibelement (20) als Klammer ausgebildet ist, wobei die freien Enden an der Aussparung (22) anliegen und zusammengedrückt werden.

8. Luftausströmer nach einem der vorhergehenden Ansprüche, **dadurch gekennzeichnet, daß** ein Bedienelement (28) an der Lamelle (13) angreift, die mit dem Reibelement (20) in Verbindung steht.

## Claims

1. An air vent, in particular for a vehicle, comprising at least one adjustable vane (13) with which a friction element (20) is associated that opposes friction to a movement of the vane (13), the friction element (20) being disposed in a recess (22) which is provided in a housing (10), **characterized in that** the recess (22) is wedge-shaped.

2. The air vent according to claim 1, **characterized in that** the vane (13) is fastened to a bearing part (14) via a pin (16).

3. The air vent according to claim 2, **characterized in that** the friction element (20) engages the pin (16).

4. The air vent according to claim 2 or 3, **characterized in that** the friction element (20) is attached to the bearing part (14).

5. The air vent according to claim 2 or 3, **characterized in that** the friction element (20) is firmly connected to the bearing part (14).

6. The air vent according to any of the preceding claims, **characterized in that** the friction element (20) is configured as a spring element.

7. The air vent according to any of the preceding claims, **characterized in that** the friction element (20) is configured as a clamp, the free ends resting against the recess (22) and being pressed together.

8. The air vent according to any of the preceding claims, **characterized in that** an operating element (28) engages the vane (13) that communicates with the friction element (20).

## Revendications

1. Diffuseur d'air, en particulier pour un véhicule, comportant au moins une lamelle réglable (13) à laquelle est associé un élément de friction (20) qui oppose une friction à un mouvement de la lamelle (13), l'élément de friction (20) étant logé dans un évidement (22) prévu dans un boîtier (10), **caractérisé en ce que** l'évidement (22) est en forme de coin.

2. Diffuseur d'air selon la revendication 1, **caractérisé en ce que** la lamelle (13) est fixée à une pièce de support (14) au moyen d'un tenon (16).

3. Diffuseur d'air selon la revendication 2, **caractérisé en ce que** l'élément de friction (20) s'engage sur le tenon (16).

4. Diffuseur d'air selon la revendication 2 ou 3, **caractérisé en ce que** l'élément de friction (20) est monté sur la pièce de support (14).

5. Diffuseur d'air selon la revendication 2 ou 3, **caractérisé en ce que** l'élément de friction (20) est relié de manière solidaire à la pièce de support (14).

6. Diffuseur d'air selon l'une des revendications précédentes, **caractérisé en ce que** l'élément de friction (20) est réalisé sous forme d'élément ressort.

7. Diffuseur d'air selon l'une des revendications précédentes, **caractérisé en ce que** l'élément de friction (20) est réalisé sous forme de pince, les extrémités libres étant en appui sur l'évidement (22) et pressées l'une vers l'autre.

8. Diffuseur d'air selon l'une des revendications précédentes, **caractérisé en ce qu'**un élément de commande (28) s'engage sur la lamelle (13) qui communique avec l'élément de friction (20).
